# FASCICULE DE BREVET EUROPEEN

(11) **EP 3 148 674 B1**
(45) Date de publication et mention de la délivrance du brevet: **11.07.2018**
(21) Numéro de dépôt: 15721725.8
(22) Date de dépôt: 12.05.2015
(51) Int. Cl.: B01D 53/14, C07C 213/00

(54) **SOLUTION ABSORBANTE CONTENANT UN MÉLANGE DE 1,2-BIS-(2-DIMÉTHYLAMINOÉTHOXY)-ÉTHANE ET DE 2-[2-(2-DIMÉTHYLAMINOÉTHOXY)-ÉTHOXY]-ÉTHANOL, ET PROCÉDÉ D'ÉLIMINATION DE COMPOSÉS ACIDES D'UN EFFLUENT GAZEUX**
ABSORBIERENDE LÖSUNG MIT EINER MISCHUNG AUS 1,2-BIS-(2-DIMETHYLAMINO-ETHOXY)-ETHAN UND 2-[2-(2-DIMETHYLAMINOETHOXY)]-ETHOXY-ETHANOL UND VERFAHREN ZUR ENTFERNUNG SAURER VERBINDUNGEN AUS ABGASEN
ABSORBENT SOLUTION CONTAINING A MIXTURE OF 1,2-BIS-(2-DIMETHYLAMINOETHOXY)-ETHANE AND 2-[2-(2- DIMETHYLAMINOETHOXY)-ETHOXY]-ETHANOL, AND METHOD FOR ELIMINATING ACID COMPOUNDS FROM A GAS EFFLUENT

(30) Priorité: 26.05.2014 FR 1454713
(43) Date de publication de la demande: 05.04.2017
(73) Titulaire: IFP Energies nouvelles, 92500 Rueil-Malmaison (FR)
(72) Inventeur: DELFORT, Bruno, F-75005 Paris (FR); LE PENNEC, Dominique, F-78910 Orgerus (FR); GRANDJEAN, Julien, F-69008 Lyon (FR); HUARD, Thierry, F-69360 Saint Symphorien d'Ozon (FR); GIRAUDON, Laetitia, F-42410 Saint Michel sur Rhône (FR); WENDER, Aurélie, F-92500 Rueil-Malmaison (FR)
(86) Numéro de dépôt international: PCT/EP2015/060519
(87) Numéro de publication internationale: WO 2015/180958

(56) Documents cités:
- DE-A1-102005 043 142
- FR-A1- 2 900 841
- FR-A1- 2 961 114
- US-A1- 2013 243 676

## Description

### Domaine de l'invention

La présente invention concerne le domaine des procédés de désacidification d'un effluent gazeux. L'invention s'applique avantageusement au traitement de gaz d'origine industrielle et du gaz naturel.

### Contexte général

On utilise couramment des procédés de désacidification de gaz mettant en oeuvre des solutions aqueuses d'amines pour retirer les composés acides présents dans un gaz, notamment le dioxyde de carbone (CO₂), l'hydrogène sulfuré (H₂S), l'oxysulfure de carbone (COS), le disulfure de carbone (CS₂), le dioxyde de soufre (SO₂) et les mercaptans (RSH) tel que le méthylmercaptan (CH₃SH), l'éthylmercaptan (CH₃CH₂SH) et le propylmercaptan (CH₃CH₂CH₂SH). Le gaz est désacidifié par mise en contact avec la solution absorbante, puis la solution absorbante est régénérée thermiquement.

Ces procédés de désacidification de gaz acides sont aussi communément appelés "lavage aux solvants" avec un solvant dit "chimique", par opposition à l'utilisation d'un solvant dit "physique" pour l'absorption qui n'est pas basée sur la réalisation de réactions chimiques.

Un solvant chimique correspond à une solution aqueuse comprenant un réactif qui réagit sélectivement avec les composés acides (H₂S, CO₂, COS, CS₂, etc.) présents dans le gaz traité pour former des sels, sans réagir avec les autres composés non acides du gaz. Le gaz traité après mise en contact avec le solvant est alors appauvri en composés acides, lesquels sont sélectivement transférés sous forme de sels dans le solvant. Les réactions chimiques sont réversibles, ce qui permet au solvant chargé en composés acides d'être ensuite désacidifié, par exemple sous l'action de la chaleur, pour libérer d'une part les composés acides sous forme de gaz, qui peuvent alors être stockés, transformés ou être utilisés pour diverses applications, et pour d'autre part régénérer le solvant qui retourne à son état initial et peut ainsi être réutilisé pour une nouvelle phase de réaction avec le gaz acide à traiter. La phase de réaction du solvant avec le gaz acide est communément appelée la phase d'absorption, et celle où le solvant est désacidifié est appelée la phase de régénération du solvant.

En général, les performances de la séparation des composés acides du gaz, dans ce contexte, dépendent principalement de la nature de la réaction réversible choisie. Les procédés conventionnels de désacidification de gaz acides sont généralement des procédés dits "aux aminés", c'est à dire qu'ils reposent sur les réactions des composés acides avec des amines en solution. Ces réactions entrent dans le cadre général des réactions acido-basiques. L'H₂S, le CO₂, ou le COS sont par exemple des composés acides, notamment en présence d'eau, alors que les amines sont des composés basiques. Les mécanismes des réactions et la nature des sels obtenus dépendent généralement de la structure des amines mises en oeuvre.

Par exemple le document US 6 852 144 décrit une méthode d'élimination des composés acides des hydrocarbures utilisant une solution absorbante eau-N-méthyldiéthanolamine ou eau-triéthanolamine contenant une forte proportion d'un composé appartenant au groupe suivant : pipérazine et/ou méthylpipérazine et/ou morpholine.

Les performances des procédés de désacidification de gaz acides par lavage aux amines sont directement dépendantes de la nature de la ou des amines présentes dans le solvant. Ces amines peuvent être primaires, secondaires ou tertiaires. Elles peuvent présenter une ou plusieurs fonctions amines équivalentes ou différentes par molécule.

Afin d'améliorer les performances des procédés de désacidification, il est continuellement recherché des amines toujours plus performantes.

Une limitation des solutions absorbantes couramment utilisées dans des applications de désacidification est une sélectivité insuffisante d'absorption de l'H₂S par rapport au CO₂. En effet, dans certains cas de désacidification du gaz naturel, on recherche une élimination sélective de l'H₂S en limitant au maximum l'absorption du CO₂. Cette contrainte est particulièrement importante pour des gaz à traiter contenant déjà une teneur en CO₂ inférieure ou égale à la spécification désirée. On recherche alors une capacité d'absorption de H₂S maximale avec une sélectivité maximale d'absorption de H₂S vis-à-vis du CO₂. Cette sélectivité permet de maximiser la quantité de gaz traité et de récupérer un gaz acide en sortie de régénérateur ayant une concentration la plus élevée possible en H₂S, ce qui limite la taille des unités de la chaîne soufre en aval du traitement et garantit un meilleur fonctionnement. Dans certains cas, une unité d'enrichissement en H₂S est nécessaire pour concentrer en H₂S le gaz acide. Dans ce cas, on recherche également l'amine la plus sélective. Des amines tertiaires, comme la N-méthyldiéthanolamine, ou des amines secondaires encombrées présentant une cinétique de réaction lente avec le CO₂ sont couramment utilisées, mais présentent des sélectivités limitées à des taux de charge en H₂S élevés.

Il est bien connu de l'homme du métier que les amines tertiaires ou les amines secondaires avec un encombrement stérique sévère ont une cinétique de captage du CO₂ plus lente que des amines primaires ou secondaires peu encombrées. En revanche, les amines tertiaires ou secondaires avec un encombrement stérique sévère ont une cinétique de captage de l'H₂S instantanée, ce qui permet de réaliser une élimination sélective de l'H₂S basée sur des performances cinétiques distinctes.

Différents documents proposent d'utiliser des amines tertiaires ou secondaires encombrées, en particulier des diamines tertiaires ou secondaires encombrées, en solution pour désacidifier des gaz acides.

Ainsi le brevet US 4,405,582 décrit un procédé d'absorption sélective de gaz sulfurés par un absorbant contenant un diaminoéther dont au moins une fonction amine est tertiaire et dont l'autre fonction amine est tertiaire ou secondaire possédant un encombrement stérique sévère, l'atome d'azote étant dans ce dernier cas lié soit à au moins un carbone tertiaire, soit à deux atomes de carbone secondaires. Les deux fonctions amines et les carbones de la chaîne principale peuvent être substitués par des radicaux alkyles ou hydroxyalkyles. Ces diaminoéthers peuvent être également mélangés à d'autres composés aminés de préférence la méthyldiéthanolamine.

D'autres procédés et solutions absorbantes de l'art antérieur sont connus de FR 2961114 A, de FR 2900841 A,de DE 10 2005 043 142 A et de US 2013/0243676. Une autre limitation des solutions absorbantes couramment utilisées dans des applications de désacidification totale est une cinétique de captage du CO₂ ou du COS trop lente. Dans le cas où les spécifications désirées sur le CO₂ ou en COS sont très poussées, on recherche une cinétique de réaction la plus rapide possible de manière à réduire la hauteur de la colonne d'absorption. Cet équipement sous pression représente en effet une part importante des coûts d'investissements du procédé.

Que l'on recherche une cinétique de captage du CO₂ et du COS maximale dans une application désacidification totale, ou une cinétique de captage du CO₂ minimale dans une application sélective, on désire toujours utiliser une solution absorbante ayant la capacité cyclique la plus grande possible. Cette capacité cyclique, notée Δα correspond à la différence de taux de charge (α désignant le nombre de mole de composés acides absorbés n_{gaz acide} par kilogramme de solution absorbante) entre la solution absorbante soutirée en fond de la colonne d'absorption et la solution absorbante alimentant ladite colonne. En effet, plus la solution absorbante a une forte capacité cyclique, plus le débit de solution absorbante qu'il faut mettre en oeuvre pour désacidifier le gaz à traiter est restreint. Dans les procédés de traitement de gaz, la réduction du débit de solution absorbante a également un fort impact sur la réduction des investissements, notamment au niveau du dimensionnement de la colonne d'absorption.

Un autre aspect primordial des opérations de traitement de gaz ou fumées industrielles par solvant reste la régénération de l'agent de séparation. En fonction du type d'absorption (physique et/ou chimique), on envisage généralement une régénération par détente, et/ou par distillation et/ou par entraînement par un gaz vaporisé appelé "gaz de strippage". La consommation énergétique nécessaire à la régénération du solvant peut être très importante, ce qui est particulièrement vrai dans le cas où la pression partielle de gaz acides est faible, et représenter un coût opératoire considérable pour le procédé de captage du CO₂.

Il est bien connu de l'homme du métier que l'énergie nécessaire à la régénération par distillation d'une solution d'amine peut se décomposer selon trois postes différents : l'énergie nécessaire pour réchauffer la solution absorbante entre la tête et le fond du régénérateur, l'énergie nécessaire pour abaisser la pression partielle de gaz acide dans le régénérateur par vaporisation d'un gaz de strippage, et enfin l'énergie nécessaire pour casser la liaison chimique entre l'amine et le CO₂.

Ces deux premiers postes sont proportionnels aux débits de solution absorbante qu'il est nécessaire de faire circuler dans l'unité pour réaliser une spécification donnée. Pour diminuer la consommation énergétique associée à la régénération du solvant, il est donc préférable encore une fois de maximiser la capacité cyclique du solvant. En effet, plus la solution absorbante a une forte capacité cyclique, plus le débit de solution absorbante qu'il faut mettre en oeuvre pour désacidifier de gaz à traiter est restreint.

Il existe ainsi un besoin, dans le domaine de la désacidification de gaz, de fournir des composés qui soient de bons candidats pour l'élimination des composés acides d'un effluent gazeux, notamment, mais pas exclusivement, pour l'élimination sélective de l'H₂S par rapport au CO₂, et qui permettent de fonctionner à moindres coûts opératoires (dont l'énergie de régénération) et d'investissements (dont le coût de la colonne d'absorption).

### Description de l'invention

Les inventeurs ont mis en évidence que les solutions absorbantes à base de diamines tertiaires ou secondaires possédant un encombrement stérique sévère et pouvant contenir d'autres amines ne sont pas équivalentes en terme de performances pour leur usage pour le traitement de gaz acides dans un procédé industriel.

La présente invention a pour objet une solution absorbante pour éliminer les composés acides d'un effluent gazeux, contenant un mélange d'une diamine tertiaire particulière, à savoir la 1,2-bis-(2-diméthylaminoéthoxy)-éthane, avec une monoamine tertiaire particulière, à savoir le 2-[2-(2-diméthylaminoéthoxy)-éthoxy]-éthanol, ainsi qu'un procédé d'élimination des composés acides d'un effluent gazeux mettant en oeuvre une telle solution.

Les inventeurs ont mis en évidence que l'utilisation du mélange en solution aqueuse selon l'invention permet d'obtenir des performances améliorées en terme de capacité cyclique d'absorption des gaz acides et de sélectivité d'absorption vis-à-vis de l'H₂S par rapport au CO₂, notamment une capacité cyclique d'absorption des gaz acides et une sélectivité d'absorption vis-à-vis de l'H₂S par rapport au CO₂ plus importante que des amines de référence telles que la N-méthyldiéthanolamine (MDEA) ou le 1,2-bis-(2-diméthylaminoéthoxy)-éthane utilisés seules ou en mélange en solution aqueuse.

Les inventeurs ont notamment découvert de manière inattendue que l'utilisation d'un mélange en solution aqueuse selon l'invention permet d'obtenir une capacité d'absorption des gaz acides supérieure à celle d'une solution absorbante de 1,2-bis-(2-diméthylaminoéthoxy)-éthane contenant la même concentration massique en 1,2-bis-(2-diméthylaminoéthoxy)-éthane que la concentration massique totale en amine dans la solution selon l'invention, alors que la solution selon l'invention contient une concentration molaire en fonction amines inférieure.

L'utilisation d'un mélange selon l'invention permet également d'obtenir une capacité d'absorption des gaz acide supérieure à celle d'une solution absorbante de 1,2-bis-(2-diméthylaminoéthoxy)-éthane contenant la même concentration massique de 1,2-bis-(2-diméthylaminoéthoxy)-éthane que dans la solution selon l'invention.

Les inventeurs ont également découvert de manière surprenante que l'utilisation d'un mélange selon l'invention permet d'obtenir une capacité d'absorption des gaz acides supérieure à celle d'un mélange de 1,2-bis-(2-diméthylaminoéthoxy)-éthane et de N-méthyldiéthanolamine (MDEA) en solution aqueuse à une concentration de 1,2-bis-(2-diméthylaminoéthoxy)-éthane et à une concentration d'amine totale équivalentes, alors que cette dernière solution (1,2-bis-(2-diméthylaminoéthoxy)-éthane et MDEA) contient une concentration molaire en fonctions amine supérieure.

### Résumé de l'invention

L'invention porte, selon un premier aspect, sur une solution absorbante pour pour éliminer des composés acides contenus dans un effluent gazeux, comportant :
- de l'eau ;
- un mélange d'amines comprenant du 1,2-bis-(2-diméthylaminoéthoxy)-éthane de formule (I) suivante : 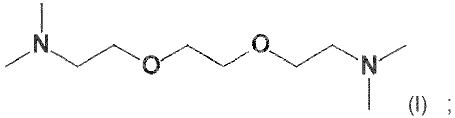 et
   du 2-[2-(2-diméthylaminoéthoxy)-éthoxy]-éthanol de formule (II) suivante :

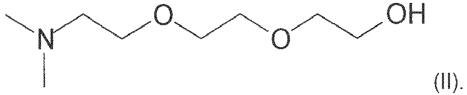

De préférence, la solution absorbante comporte entre 5 % et 95 % poids du mélange d'amines, de préférence entre 10 % et 90 % poids du mélange d'amines, et entre 5 % et 95 % poids d'eau, et de préférence entre 10 % et 90% poids d'eau.

Avantageusement, le rapport des concentrations massiques entre le 1,2-bis-(2-diméthylaminoéthoxy)-éthane et le du 2-[2-(2-diméthylaminoéthoxy)-éthoxy]-éthanol est compris entre 0,25 et 10, de préférence entre 0,5 et 2.

La solution absorbante peut en outre comporter entre 5 % et 50 % poids d'au moins une amine supplémentaire, ladite amine supplémentaire étant soit une amine tertiaire, soit une amine secondaire comprenant deux carbones secondaires en alpha de l'atome d'azote ou au moins un carbone tertiaire en alpha de l'atome d'azote.

Ladite amine supplémentaire peut être une amine tertiaire choisie dans le groupe constitué par :
- la N-méthyldiéthanolamine ;
- la triéthanolamine ;
- la diéthylmonoéthanolamine ;
- la diméthylmonoéthanolamine ;
- l'éthyldiéthanolamine ;
- le 2-(2-diméthylamino-éthoxy)-éthanol ;
- la diméthyléthylamine ;
- la diméthyléthoxyéthylamine ;
- la bis(diméthylaminoéthyl)éther ; et
- la tétraméthyléthylènediamine.

La solution absorbante peut comporter, en outre, une quantité non nulle et inférieure à 30 % poids d'au moins une amine primaire ou une amine secondaire.

Ladite amine primaire ou secondaire peut être choisie dans le groupe constitué par :
- la monoéthanolamine ;
- la diéthanolamine ;
- la N-butyléthanolamine ;
- l'aminoéthyléthanolamine ;
- le diglycolamine ;
- la pipérazine ;
- la 1-méthylpipérazine ;
- la 2-méthylpipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine ;
- la N,N,-diméthyl-1,6-hexanediamine ;
- la N,N'-diméthyl-1,6-hexanediamine ;
- la N-méthyl-1,6-hexanediamine ; et
- la N,N',N'-triméthyl-1,6-hexanediamine.

La solution absorbante peut comporter en outre au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther,l'hexaéthylèneglycoldiméthyléther ,l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthylimidazolidin-2-one, le N-méthylimidazole, l'éthylèneglycol, le diéthylèneglycol, le triéthylèneglycol, le thiodiglycol, et le tributylphosphate.

L'invention porte, selon un deuxième aspect, sur un procédé d'élimination des composés acides contenus dans un effluent gazeux dans lequel on effectue une étape d'absorption des composés acides par mise en contact de l'effluent gazeux avec une solution absorbante selon l'invention.

De préférence, l'étape d'absorption des composés acides est réalisée à une pression comprise entre 1 bar et 200 bar, et à une température comprise entre 20°C et 100°C.

De préférence, on obtient une solution absorbante chargée en composés acides après l'étape d'absorption, et on effectue au moins une étape de régénération de ladite solution absorbante chargée en composés acides à une pression comprise entre 1 bar et 10 bar et à une température comprise entre 100 °C et 180 °C.

L'effluent gazeux peut être choisi parmi le gaz naturel, les gaz de synthèse, les fumées de combustion, les fumées de hauts-fourneaux, les gaz de raffinerie tels que le gaz de synthèse, les gaz produits par craquage, les gaz combustibles, les gaz acides issus d'une unité aux aminés, les gaz issus d'une unité de réduction en queue du procédé Claus, les gaz de fermentation de biomasse, les gaz de cimenterie, les fumées d'incinérateur.

Le procédé selon l'invention peut être mis en oeuvre pour éliminer sélectivement de l'H₂S par rapport au CO₂ d'un effluent gazeux comportant de l'H₂S et du CO₂, de préférence du gaz naturel.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 représente un schéma de principe de mise en oeuvre d'un procédé de traitement de gaz acides.
La figure 2 représente schématiquement des voies de synthèse du 1,2-bis-(2-diméthylaminoéthoxy)-éthane, du 2-[2-(2-diméthylaminoéthoxy)-éthoxy]-éthanol, et d'un mélange de ces deux composés.

### Description détaillée de l'invention

La présente invention propose d'éliminer les composés acides d'un effluent gazeux en mettant en oeuvre en solution aqueuse dont la composition est détaillée ci-après.

### Composition de la solution absorbante

La solution absorbante mise en oeuvre pour l'élimination des composés acides contenus dans un effluent gazeux comporte au moins :
- de l'eau;
- du 1,2-bis-(2-diméthylaminoéthoxy)-éthane de formule (I) suivante : 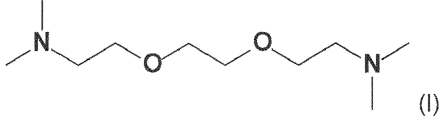
- du 2-[2-(2-diméthylaminoéthoxy)-éthoxy]-éthanol de formule (II) suivante :

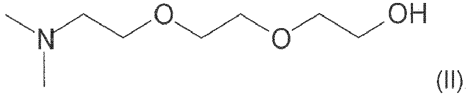

La concentration totale du mélange d'amines comprenant le 1,2-bis-(2-diméthylaminoéthoxy)-éthane et le 2-[2-(2-diméthylaminoéthoxy)-éthoxy]-éthanol peut être variable dans la solution absorbante, par exemple comprise entre 5 % et 95 % poids, de préférence entre 10 % et 90 % poids, encore plus préférentiellement entre 20 % et 60 % poids, et de manière très préférée entre 25 % et 50 % poids, bornes incluses.

Le rapport des concentrations massiques entre la diamine tertiaire de formule (I) et la monoamine tertiaire de formule (II) est de préférence compris entre 0,25 et 10, de manière préférée entre 0,5 et 2.

Selon un mode de réalisation, le rapport de concentration massique entre la diamine tertiaire de formule (I) et la monoamine tertiaire de formule (II) est compris entre 1,4 et 1,6.

La solution absorbante peut contenir entre 5 % et 95 % poids d'eau, de préférence entre 10 % et 90 % poids d'eau, plus préférentiellement entre 40 % et 80 % poids d'eau, et de manière très préférée de 50% à 75% d'eau, bornes incluses.

La somme des fractions massiques exprimées en % poids des différents composés de la solution absorbante est égale à 100 % en poids de la solution absorbante.

Selon un mode de réalisation, la solution absorbante comprend en outre au moins une amine supplémentaire qui est une amine tertiaire telle que la N-méthyldiéthanolamine, la triéthanolamine, la diéthylmonoéthanolamine, la diméthylmonoéthanolamine, l'éthyldiéthanolamine, le 2-(2-diméthylamino-éthoxy)-éthanol, la diméthyléthylamine, la diméthyléthoxyéthylamine, ou qui est une diamine tertiaire telle que le bis(diméthylaminoéthyl)éther ou la tétraméthyléthylènediamine, ou qui est une amine secondaire ayant un encombrement stérique sévère, cet encombrement étant défini soit par la présence de deux carbones secondaires en alpha de l'azote, soit par au moins un carbone tertiaire en alpha de l'azote. On entend par ladite amine supplémentaire tout composé possédant au moins une fonction amine tertiaire ou secondaire sévèrement encombrée. La concentration de ladite amine supplémentaire tertiaire ou secondaire sévèrement encombrée dans la solution absorbante peut être comprise entre 5 % et 50 % poids, de préférence entre 5 % et 35 % poids, de manière très préférée entre 5 % et 25 % poids.

Selon un mode de réalisation, la solution absorbante peut en outre comprendre un ou plusieurs composés contenant au moins une fonction amine primaire ou secondaire. Par exemple, la solution absorbante comporte jusqu'à une concentration de 30 % poids, de préférence inférieure à 15 % poids, de préférence inférieure à 10 % poids dudit composé contenant au moins une fonction amine primaire ou secondaire. De préférence, la solution absorbante comporte au moins 0,5 % poids dudit composé contenant au moins une fonction amine primaire ou secondaire. Ledit composé permet d'accélérer la cinétique d'absorption du CO₂ et, dans certains cas, du COS contenu dans le gaz à traiter.

Une liste non exhaustive de composés contenant au moins une fonction amine primaire ou secondaire qui peuvent entrer dans la formulation est donnée ci-dessous :
- la monoéthanolamine ;
- la diéthanolamine ;
- la N-butyléthanolamine ;
- l'aminoéthyléthanolamine ;
- le diglycolamine ;
- la pipérazine ;
- la 1-méthylpipérazine ;
- la 2-méthylpipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine et tous ses dérivés diversement N-alkylés tels par exemple la N,N-diméthyl-1,6-hexanediamine, la N,N'-diméthyl-1,6-hexanediamine la N-méthyl-1,6-hexanediamine ou la N,N',N'-triméthyl-1,6-hexanediamine.

La solution absorbante comprenant le mélange 1,2-bis-(2-diméthylaminoéthoxy)-éthane et de 2-[2-(2-diméthylaminoéthoxy)-éthoxy]-éthanol peut également comprendre un mélange d'amines supplémentaires primaires et/ou secondaires telles que définies ci-dessus.

Selon un mode de réalisation, la solution absorbante contient des composés organiques non réactifs vis à vis des composés acides (couramment nommé "solvants physiques"), qui permettent d'augmenter la solubilité d'au moins un ou plusieurs composés acides de l'effluent gazeux. Par exemple, la solution absorbante peut comporter entre 5% et 50% poids de solvant physique tel que des alcools, des éthers, des éther-alcools, des éthers de glycol et de polyéthylèneglycol, des thioéthers de glycol, des esters et alkoxyesters de glycol et de polyéthylèneglycol, des esters de glycérol, des lactones, des lactames, des pyrrolidones N-alkylées, des dérivés de la morpholine, de la morpholin-3-one, des imidazoles et des imidazolidinones, des pipéridones N-alkylées, des cyclotétraméthylènesulfones, des N-alkylformamides, des N-alkylacétamides, des éthers-cétones, des carbonates d'alkyles ou des phosphates d'alkyles et leurs dérivés. A titre d'exemple et de façon non limitative, il peut s'agir d'un solvant ou d'un mélange de plusieurs solvants choisis parmi le méthanol, l'éthanol, le 2-éthoxyéthanol, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthylimidazolidin-2-one, la N-méthylimidazole, l'éthylèneglycol, le diéthylèneglycol, le triéthylèneglycol, le thiodiglycol, le carbonate de propylène, et le tributylphosphate.

### Synthèse du mélange des composés selon l'invention

### Synthèse du 2-[2-(2-diméthylaminoéthoxy)-éthoxy]-éthanol

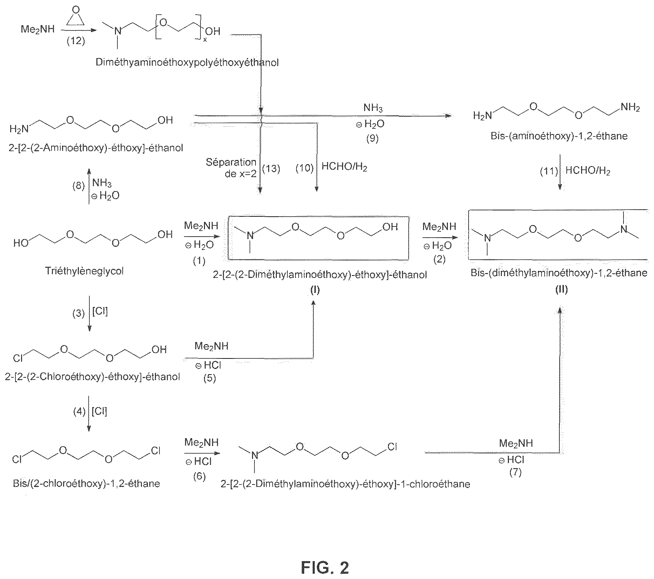

La synthèse du 2-[2-(2-diméthylaminoéthoxy)-éthoxy]-éthanol peut être réalisée par toutes les voies permises par la chimie organique. Sans être exhaustif, on peut citer les quatre voies décrites ci-dessous, illustrées à la figure 2. Dans la figure 2, les flèches représentent des étapes de réaction, les réactions étant numérotées de (1) à (13). Il s'agit de schémas réactionnels.

### - Première voie d'obtention du 2-[2-(2-diméthylaminoéthoxy)-éthoxy]-éthanol :

Selon cette première voie, le 2-[2-(2-diméthylaminoéthoxy)-éthoxy]-éthanol est obtenu par réaction d'une mole de diméthylamine avec une mole de triéthylèneglycol selon une réaction de condensation bien connue (réaction 1). Cette réaction peut par exemple s'effectuer en présence d'hydrogène et d'un catalyseur approprié dans des conditions bien connues de l'homme du métier. L'obtention sélective de 2-[2-(2-diméthylaminoéthoxy)-éthoxy]-éthanol par cette voie sera favorisée par l'utilisation d'un excès de triéthylèneglycol. Le triéthylèneglycol qui est le précurseur dans cette réaction est généralement obtenu par trimérisation de l'oxyde d'éthylène selon une réaction conventionnelle d'ouverture de cycle en présence d'une molécule d'eau. Le triéthylèneglycol est un composé industriel abondant et peu onéreux.

### - Deuxième voie d'obtention du 2-[2-(2-diméthylaminoéthoxy)-éthoxy]-éthanol :

Selon cette deuxième voie, le 2-[2-(2-diméthylaminoéthoxy)-éthoxy]-éthanol est obtenu par une réaction d'halogénation, par exemple de chloration, du triéthylèneglycol en 2-[2-(2-chloroéthoxy)-éthoxy]-éthanol (réaction 3), avec un agent de chloration conventionnel tel par exemple l'acide chlorhydrique ou le chlorure de thionyle, puis ensuite par une réaction de condensation du 2-[2-(2-chloroéthoxy)-éthoxy]-éthanol avec de la diméthylamine (réaction 5). L'obtention sélective de 2-[2-(2-chloroéthoxy)-éthoxy]-éthanol par cette voie peut être favorisée par l'utilisation d'un excès de triéthylèneglycol.

### - Troisième voie d'obtention du 2-[2-(2-diméthylaminoéthoxy)-éthoxy]-éthanol :

Selon cette troisième voie, le 2-[2-(2-diméthylaminoéthoxy)-éthoxy]-éthanol est obtenu d'abord par la réaction d'une mole d'ammoniac avec une mole de triéthylèneglycol selon une réaction de condensation bien connue (réaction 8) conduisant au 2-[2-(2-aminoéthoxy)-éthoxy]-éthanol. La fonction amine primaire de ce dernier est ensuite méthylée par réaction de formaldéhyde en présence d'hydrogène, généralement à l'aide d'un catalyseur approprié (réaction 10) dans des conditions bien connues de l'homme du métier. L'obtention sélective de 2-[2-(2-aminoéthoxy)-éthoxy]-éthanol selon la réaction 8 peut être favorisée par l'utilisation d'un excès de triéthylèneglycol.

### - Quatrième voie d'obtention du 2-[2-(2-diméthylaminoéthoxy)-éthoxy]-éthanol :

Selon cette quatrième voie, le 2-[2-(2-diméthylaminoéthoxy)-éthoxy]-éthanol est obtenu par réaction de diméthylamine et d'oxyde d'éthylène afin d'obtenir un diméthylaminoéthoxypolyéthoxyéthanol, qui est le produit de l'oligomérisation de l'oxyde d'éthylène amorcée par de la diméthylamine (réaction 12). Le degré d'oligomérisation moyen du mélange de produits obtenus dépend du rapport molaire entre l'oxyde d'éthylène et la diméthylamine. L'obtention du 2-[2-(2-diméthylaminoéthoxy)-éthoxy]-éthanol requiert un rapport molaire théorique de 3 pour 1. La séparation de ce mélange d'oligomères, notamment par distillation, permet d'isoler le 2-[2-(2-diméthylaminoéthoxy)-éthoxy]-éthanol (étape13).

### Synthèse du 1,2-bis-(2-diméthylaminoéthoxy)-éthane

La synthèse du 1,2-bis-(2-diméthylaminoéthoxy)-éthane (aussi nommé bis-(2-diméthylaminoéthoxy)-1,2-éthane dans la figure 2) peut être réalisée par toutes les voies permises par la chimie organique. Sans être exhaustif, on peut citer les trois voies suivantes.

### - Première voie d'obtention du 1,2-bis-(2-diméthylaminoéthoxy)-éthane :

Selon cette première voie, le 1,2-bis-(2-diméthylaminoéthoxy)-éthane est obtenu par réaction d'une mole de diméthylamine avec une mole de 2-[2-(2-diméthylaminoéthoxy)-éthoxy]-éthanol, dont la synthèse est précédemment décrite, selon une réaction de condensation bien connue (réaction 2). Cette réaction peut par exemple s'effectuer en présence d'hydrogène et d'un catalyseur approprié dans des conditions bien connues de l'homme du métier.

On peut aussi obtenir le 1,2-bis-(2-diméthylaminoéthoxy)-éthane en effectuant cette réaction directement à partir de triéthylèneglycol au lieu du 2-[2-(2-diméthylaminoéthoxy)-éthoxy]-éthanol, en utilisant 2 moles de diméthylamine, c'est-à-dire en combinant les réactions 1 et 2 au cours de la même étape.

### - Deuxième voie d'obtention du 1,2-bis-(2-diméthylaminoéthoxy)-éthane :

Selon cette deuxième voie, le 1,2-bis-(2-diméthylaminoéthoxy)-éthane est obtenu par réaction d'halogénation par exemple de chloration du 2-[2-(2-chloroéthoxy)-éthoxy]-éthanol, dont la synthèse est précédemment décrite, en bis-(2-chloroéthoxy)-1,2-éthane (réaction 4), avec un agent de chloration conventionnel tel par exemple l'acide chlorhydrique ou le chlorure de thionyle, puis ensuite par une réaction de condensation du bis-(2-chloroéthoxy)-1,2-éthane avec de la diméthylamine pour conduire au 2-[2-(2-diméthylaminoéthoxy)-éthoxy]-1-chloroéthane, suivie de la réaction de condensation du au 2-[2-(2-diméthylaminoéthoxy)-éthoxy]-1-chloroéthane avec de la diméthylamine pour conduire au 1,2-bis-(2-diméthylaminoéthoxy)-éthane (enchaînement des réactions 6 puis 7).

On peut aussi obtenir le 1,2-bis-(2-diméthylaminoéthoxy)-éthane en effectuant cette réaction directement à partir de triéthylèneglycol au lieu du 2-[2-(2-diméthylaminoéthoxy)-éthoxy]-éthanol c'est-à-dire en combinant les réactions 3 et 4 au cours de la même étape, puis 6 et 7 au cours de la même étape.

### - Troisième voie d'obtention du 1,2-bis-(2-diméthylaminoéthoxy)-éthane :

Selon cette troisième voie, le 1,2-bis-(2-diméthylaminoéthoxy)-éthane est obtenu d'abord par la réaction d'une mole d'ammoniac avec une mole 2-[2-(2-aminoéthoxy)-éthoxy]-éthanol, dont la synthèse est précédemment décrite, selon une réaction de condensation bien connue (réaction 9) conduisant au bis-(aminoéthoxy)-1,2-éthane. Les fonctions amines primaires de ce dernier sont ensuite méthylée par réaction de formaldéhyde en présence d'hydrogène, généralement à l'aide d'un catalyseur approprié (réaction 11) dans des conditions bien connues de l'homme du métier.

On peut aussi obtenir le bis-(aminoéthoxy)-1,2-éthane directement à partir de triéthylèneglycol au lieu du 2-[2-(2-aminoéthoxy)-éthoxy]-éthanol en utilisant 2 moles d'ammoniac pour combiner les réactions 8 et 9.

### Synthèse d'un mélange de 2-[2-(2-diméthylaminoéthoxy)-éthoxy]-éthanol et de 1,2-bis-(2-diméthylaminoéthoxy)-éthane

Dans le cadre de l'invention où l'on souhaite utiliser des mélanges de 2-[2-(2-diméthylaminoéthoxy)-éthoxy]-éthanol et de 1,2-bis-(2-diméthylaminoéthoxy)-éthane, il est possible de réaliser la synthèse de chacune de ces molécules séparément en utilisant toutes les voies de synthèses permises pour chacune de ces molécules, telles que décrites ci-dessus par exemple, puis de mélanger ensuite les deux molécules.

Avantageusement, on peut réaliser la synthèse du 2-[2-(2-diméthylaminoéthoxy)-éthoxy]-éthanol et du 1,2-bis-(2-diméthylaminoéthoxy)-éthane au cours des mêmes étapes et obtenir un mélange de ces deux molécules.

On peut par exemple obtenir directement un mélange de 2-[2-(2-diméthylaminoéthoxy)-éthoxy]-éthanol et 1,2-bis-(2-diméthylaminoéthoxy)-éthane par réaction de diméthylamine et de triéthylèneglycol selon une réaction de condensation bien connue en ajustant le rapport entre la diméthylamine et le triéthylène glycol de façon à obtenir, selon la réaction 1 et l'enchaînement des réactions 1 et 2, un mélange de 2-[2-(2-diméthylaminoéthoxy)-éthoxy]-éthanol et de 1,2-bis-(2-diméthylaminoéthoxy)-éthane dans les proportions désirées. Ces réactions peuvent par exemple s'effectuer en présence d'hydrogène et d'un catalyseur approprié dans des conditions abondamment citées dans la littérature.

On peut également obtenir directement un mélange de 2-[2-(2-diméthylaminoéthoxy)-éthoxy]-éthanol et de 1,2-bis-(2-diméthylaminoéthoxy)-éthane par réaction d'halogénation, par exemple de chloration du triéthylèneglycol, en ajustant le rapport entre l'agent de chloration et le triéthylène glycol de façon à obtenir, selon la réaction 3 et l'enchaînement des réactions 3 et 4, un mélange de 2-[2-(2-chloroéthoxy)-éthoxy]-éthanol et de bis-(2-chloroéthoxy)-1,2-éthane dans des proportions désirées. La réaction de la diméthylamine avec ce mélange de 2-[2-(2-chloroéthoxy)-éthoxy]-éthanol et de bis-(2-chloroéthoxy)-1,2-éthane conduit directement au mélange de 2-[2-(2-diméthylaminoéthoxy)-éthoxy]-éthanol et de 1,2-bis-(2-diméthylaminoéthoxy)-éthane selon les réactions 5 et 6 plus 7 qui sont réalisée au cours de la même étape.

On peut encore obtenir directement un mélange de 2-[2-(2-diméthylaminoéthoxy)-éthoxy]-éthanol et de 1,2-bis-(2-diméthylaminoéthoxy)-éthane par réaction d'ammoniac et de triéthylèneglycol, selon une réaction de condensation bien connue, en ajustant le rapport entre l'ammoniac et le triéthylène glycol de façon à obtenir, selon la réaction 8 et l'enchaînement des réactions 8 et 9, un mélange de 2-[2-(2-aminoéthoxy)-éthoxy]-éthanol et de bis-(aminoéthoxy)-1,2-éthane dans les proportions désirées. Les fonctions amines primaires des molécules constituant ce mélange seront ensuite méthylées par réaction de formaldéhyde en présence d'hydrogène et à l'aide en général d'un catalyseur approprié dans des conditions abondamment citées dans la littérature, pour conduire au mélange de 2-[2-(2-diméthylaminoéthoxy)-éthoxy]-éthanol et de 1,2-bis-(2-diméthylaminoéthoxy)-éthane dans les proportions désirées selon les réactions 10 et 11 qui seront ici réalisée au cours de la même étape.

### Nature des effluents gazeux

La solution absorbante selon l'invention peut être mise en oeuvre pour désacidifier les effluents gazeux suivants: le gaz naturel, les gaz de synthèse, les fumées de combustion, les fumées de hauts-fourneaux, les gaz de raffinerie tels que le gaz de synthèse, les gaz produits par craquage, les gaz combustibles couramment nommés "fuel gas" selon la terminologie anglo-saxonne, les gaz acides issus d'une unité aux amines, les gaz issus d'une unité de réduction en queue du procédé Claus, les gaz de fermentation de biomasse, les gaz de cimenterie, les fumées d'incinérateur.

Ces effluents gazeux contiennent un ou plusieurs des composés acides suivants: le CO₂, l'H₂S, des mercaptans (par exemple le méthylmercaptan (CH₃SH), l'éthylmercaptan (CH₃CH₂SH), les propylmercaptans (C₃H₇SH), les butylmercaptans ((C₄H₉SH)), du COS, du CS₂, le SO₂.

Les fumées de combustion sont produites notamment par la combustion d'hydrocarbures, de biogaz, de charbon dans une chaudière ou pour une turbine à gaz de combustion, par exemple dans le but de produire de l'électricité. A titre d'illustration, on peut mettre en oeuvre un procédé de désacidification selon l'invention pour absorber au moins 70 %, de préférence au moins 80 % voire au moins 90 % du CO₂ contenu dans les fumées de combustion. Ces fumées ont généralement une température comprise entre 20°C et 60°C, une pression comprise entre 1 et 5 bar et peuvent comporter entre 50 % et 80 % d'azote, entre 5 % et 40 % de dioxyde de carbone, entre 1 % et 20 % d'oxygène, et quelques impuretés comme des SOx et des NOx, s'ils n'ont pas été éliminés en amont du procédé de désacidification. En particulier, le procédé de désacidification selon l'invention est particulièrement bien adapté pour absorber le CO₂ contenu dans des fumées de combustion comportant une faible pression partielle de CO₂, par exemple une pression partielle de CO₂ inférieure à 200 mbar.

Le procédé de désacidification selon l'invention peut être mis en oeuvre pour désacidifier un gaz de synthèse. Le gaz de synthèse contient du monoxyde de carbone CO, de l'hydrogène H₂ (généralement dans un ratio H₂/CO égale à 2), de la vapeur d'eau (généralement à saturation à la température où le lavage est effectué) et du dioxyde de carbone CO₂ (de l'ordre de la dizaine de pourcents). La pression est généralement comprise entre 20 et 30 bar, mais peut atteindre jusqu'à 70 bar. Il peut contenir, en outre, des impuretés soufrées (H₂S, COS, etc.), azotées (NH₃, HCN) et halogénées.

Le procédé de désacidification selon l'invention est avantageusement mis en oeuvre pour désacidifier un gaz naturel. Le gaz naturel est constitué majoritairement d'hydrocarbures gazeux, mais peut contenir plusieurs des composés acides suivants : le CO₂, l'H₂S, des mercaptans, du COS, du CS₂. La teneur de ces composés acides est très variable et peut aller jusqu'à 70 % en volume pour le CO₂ et jusqu'à 40 % en volume pour l'H₂S. La température du gaz naturel peut être comprise entre 20°C et 100°C. La pression du gaz naturel à traiter peut être comprise entre 10 et 200 bar. L'invention peut être mise en oeuvre pour atteindre des spécifications généralement imposées sur le gaz désacidifié, qui sont de moins de 2 % de CO₂, voire moins de 50 ppm de CO₂ pour réaliser ensuite une liquéfaction du gaz naturel et moins de 4 ppm d'H₂S, et moins de 50 ppm, voire moins de 10 ppm, volume de soufre total.

### Procédé d'élimination des composés acides dans un effluent gazeux

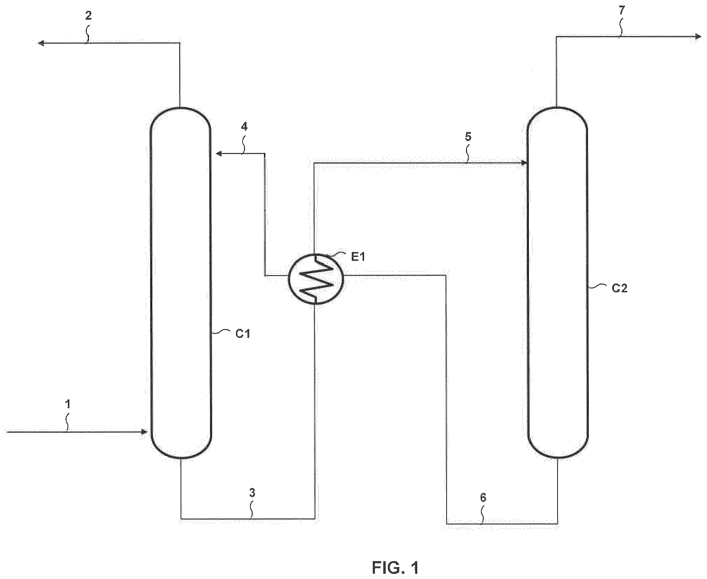

La mise en oeuvre d'une solution absorbante selon l'invention pour désacidifier un effluent gazeux est réalisée de façon schématique en effectuant une étape d'absorption suivie d'une étape de régénération, par exemple tel que représenté par la figure 1.

En référence à la figure 1, l'installation de désacidification d'un effluent gazeux selon l'invention comprend une colonne d'absorption C1 munie de moyens de mise en contact entre gaz et liquide, par exemple un garnissage vrac, un garnissage structuré ou des plateaux. L'effluent gazeux à traiter est acheminé par une conduite 1 débouchant au fond de la colonne C1. Une conduite 4 permet l'introduction de la solution absorbante en tête de la colonne C1. Une conduite 2 permet l'évacuation du gaz traité (désacidifié), et une conduite 3 permet d'acheminer la solution absorbante enrichie en composés acides suite à l'absorption vers une colonne de régénération C2. Cette colonne de régénération C2 est équipée d'internes de mise en contact entre gaz et liquide, par exemple des plateaux, des garnissages en vrac ou structurés. Le fond de la colonne C2 est équipée d'un rebouilleur R1 qui apporte la chaleur nécessaire à la régénération en vaporisant une fraction de la solution absorbante. La solution enrichie en composés acides est introduite en tête de la colonne de régénération C2 par une conduite 5. Une conduite 7 permet d'évacuer au sommet de la colonne C2 le gaz enrichi en composés acides libérés lors de la régénération, et une conduite 6 disposée au fond de la colonne C2 permet d'envoyer la solution absorbante régénérée vers la colonne d'absorption C1. Un échangeur de chaleur E1 permet de récupérer la chaleur de la solution absorbante régénérée issue de la colonne C2 pour chauffer la solution absorbante enrichie en composés acides sortant de la colonne d'absorption C1.

L'étape d'absorption consiste à mettre en contact l'effluent gazeux arrivant par la conduite 1 avec la solution absorbante arrivant par la conduite 4. Lors du contact, les fonctions amines des molécules selon la formule générale (I) de la solution absorbante réagissent avec les composés acides contenus dans l'effluent de manière à obtenir un effluent gazeux appauvri en composés acides qui est évacué par la conduite 2 en tête de la colonne C1 et une solution absorbante enrichie en composés acides évacuée par la conduite 3 en fond de la colonne C1 pour être régénérée.

L'étape d'absorption des composés acides peut être réalisée à une pression dans la colonne C1 comprise entre 1 bar et 200 bar, de préférence entre 20 bar et 100 bar pour le traitement d'un gaz naturel, de préférence entre 1 bar et 3 bar pour le traitement des fumées industrielles, et à une température dans la colonne C1 comprise entre 20°C et 100°C, préférentiellement comprise entre 30°C et 90°C, voire entre 30 et 60°C.

L'étape de régénération consiste notamment à chauffer et, éventuellement à détendre, la solution absorbante enrichie en composés acides afin de libérer les composés acides sous forme gazeuse. La solution absorbante enrichie en composés acides sortant de la colonne C1 est introduite dans l'échangeur de chaleur E1, où elle est réchauffée par le flux circulant dans la conduite 6 en provenance de la colonne de régénération C2. La solution réchauffée en sortie de E1 est introduite dans la colonne de régénération C2 par la conduite 5.

Dans la colonne de régénération C2, sous l'effet de la mise en contact de la solution absorbante arrivant par la conduite 5 avec la vapeur produite par le rebouilleur, les composés acides sont libérés sous forme gazeuse et évacués en tête de colonne C2 par la conduite 7. La solution absorbante régénérée, c'est-à-dire appauvrie en composés acides, est évacuée par la conduite 6 et est refroidie dans E1, puis recyclée dans la colonne d'absorption C1 par la conduite 4.

L'étape de régénération peut être réalisée par régénération thermique, éventuellement complétée par une ou plusieurs étapes de détente. Par exemple, la solution absorbante enrichie en composés acides évacuée par la conduite 3 peut être envoyée dans un premier ballon de détente (non représenté), avant son passage dans l'échangeur de chaleur E1. Dans le cas d'un gaz naturel, la détente permet d'obtenir un gaz évacué au sommet du ballon contenant la majeure partie des hydrocarbures aliphatiques co-absorbés par la solution absorbante. Ce gaz peut éventuellement être lavé par une fraction de la solution absorbante régénérée et le gaz ainsi obtenu peut être utilisé comme gaz combustible. Le ballon de détente opère de préférence à une pression inférieure à celle de la colonne d'absorption C1 et supérieure à celle de la colonne de régénération C2. Cette pression est généralement fixée par les conditions d'utilisation du gaz combustible, et est typiquement de l'ordre de 5 à 15 bar. Le ballon de détente opère à une température sensiblement identique à celle de la solution absorbante obtenue en fond de la colonne d'absorption C1.

La régénération peut être effectuée à une pression dans la colonne C2 comprise entre 1 bar et 5 bar, voire jusqu'à 10 bar et à une température dans la colonne C2 comprise entre 100°C et 180°C, de préférence comprise entre 110°C et 170°C, plus préférentiellement entre 120°C et 140°C. De manière préférée, la température de régénération dans la colonne C2 est comprise entre 155°C et 180°C dans le cas où l'on souhaite réinjecter les gaz acides. De manière préférée, la température de régénération dans la colonne C2 est comprise entre 115°C et 130°C dans les cas où le gaz acide est envoyé à l'atmosphère ou dans un procédé de traitement aval, comme un procédé Claus ou un procédé de traitement de gaz de queue.

### Exemples

Les exemples ci-dessous illustrent, de manière non limitative certaines des performances des composés de formules (I) et (II) en mélange lorsqu'ils sont utilisés en solution aqueuse pour éliminer des composés acides, comme le CO₂ ou l'H₂S, contenus dans un effluent gazeux par mise en contact de l'effluent gazeux avec la solution.

### Exemple 1 : Capacité d'absorption de l'H₂S de solutions aqueuses d'amines pour un procédé de traitement des gaz acides.

Les performances de capacité d'absorption de l'H₂S à 40 °C d'une solution aqueuse de 1,2-bis-(2-diméthylaminoéthoxy)-éthane en mélange avec du 2-[2-(2-diméthylaminoéthoxy)-éthoxy]-éthanol selon l'invention (solution (e)), contenant 30 % en poids de 1,2-bis-(2-diméthylaminoéthoxy)-éthane et 20% en poids de 2-[2-(2-diméthylaminoéthoxy)-éthoxy]-éthanol, sont comparées aux solutions suivantes :
- solution (a) : une solution aqueuse de MDEA contenant 50 % en poids de MDEA, qui constitue une solution absorbante de référence pour une élimination sélective en traitement de gaz ;
- solution (c) : une solution aqueuse selon l'art antérieur (brevet US 4,405,582) de 1,2-bis-(2-diméthylaminoéthoxy)-éthane contenant 30% poids de 1,2-bis-(2-diméthylaminoéthoxy)-éthane ;
- solution **(b)** : une solution aqueuse selon l'art antérieur (brevet US 4,405,582) de 1,2-bis-(2-diméthylaminoéthoxy)-éthane contenant 50% en poids de 1,2-bis-(2-diméthylaminoéthoxy)-éthane ;
- solution (d) : une solution aqueuse selon l'art antérieur (brevet US 4,405,582) d'un mélange de 1,2-bis-(2-diméthylaminoéthoxy)-éthane et de MDEA, contenant 30% en poids de 1,2-bis-(2-diméthylaminoéthoxy)-éthane en mélange avec 20% en poids de MDEA.

On réalise un test d'absorption à 40 °C sur ces solutions aqueuses d'amines au sein d'une cellule d'équilibre thermostatée. Ce test consiste à injecter dans la cellule d'équilibre, préalablement remplie de solution aqueuse d'amine dégazée, une quantité connue de gaz acide, de l'H₂S dans cet exemple, puis à attendre l'établissement de l'état d'équilibre. Les quantités de gaz acide absorbées dans la solution aqueuse d'amine sont alors déduites des mesures de température et de pression grâce à des bilans de matière et de volume. Les solubilités sont représentées de manière classique sous la forme des pressions partielles en H₂S (en bar) en fonction du taux de charge en H₂S (en mol d'H₂S/kg de solution absorbante et en mol d' H₂S/mol d'amine).

Dans le cas d'une désacidification d'un gaz naturel contenant de l'H₂S, les pressions partielles en H₂S rencontrées dans les gaz acides sont typiquement comprises entre 0,1 et 1 bar. A titre d'exemple, dans cette gamme industrielle, on compare dans le tableau 1 ci-dessous les taux de charge d'H₂S obtenus à 40°C pour différentes pressions partielles en H₂S entre la solution absorbante de MDEA (a), la solution absorbante selon l'invention (e), ainsi que les trois autres solutions aqueuses selon le brevet US 4,405,582 (b), (c), et (d).

**Tableau 1**

| | | % poids diamine (I) | % poids amine (II) | %poids MDEA | [fonction amine] (mole/kg) | Taux de charge à 40°C (mole H₂S/kg) solvant | | |
|---|---|---|---|---|---|---|---|---|
| Réf. de la solution | Amines en solution aqueuse | | | | | P= 0,1 bar | P = 0,3 bar | P = 1 bar |
| **(a)** | MDEA | 0% | 0% | 50% | 4,20 | 0,88 | 1,64 | 2,91 |
| **(b)** | Diamine I : 1,2-bis-(2-diméthylaminoéthoxy) -éthane (selon brevet US 4,405,582) | 50% | 0% | 0% | 4,90 | 0,14 | 0,39 | 1,95 |
| **(c)** | Diamine I : 1,2-bis-(2-diméthylaminoéthoxy) -éthane (selon brevet US 4,405,582) | 30% | 0% | 0% | 2,94 | 0,99 | 1,98 | 2,69 |
| **(d)** | Diamine I : 1,2-bis-(2-diméthylaminoéthoxy) -éthane + MDEA (selon brevet US 4,405,582) | 30% | 0% | 20% | 4,62 | 0,80 | 1,78 | 3,39 |
| **(e)** | Diamine I : 1,2-bis-(2-diméthylaminoéthoxy) -éthane + monoamine II : 2-[2-(2-diméthylaminoéthoxy) -éthoxy]-éthanol | 30% | 20% | 0% | 4,07 | 1,46 | 2,32 | 3,52 |

A 40 °C, quelle que soit la pression partielle en H₂S, la capacité d'absorption de la solution aqueuse selon l'invention **(e)** est supérieure à celle de la solution de MDEA de référence contenant le même pourcentage poids d'amine et une concentration en fonction amine supérieure. Ce gain de capacité permet de distinguer la formulation selon l'invention **(e)** des formulations selon l'art antérieur à base de 1,2-bis-(2-diméthylaminoéthoxy)-éthane et /ou de MDEA.

En effet, à une pression partielle de 0,1 bar, le taux de charge en H₂S est de 1,46 mol/kg dans la solution absorbante selon l'invention **(e),** et de 0,88 mol/kg dans la solution absorbante de MDEA de référence **(a)**. A une pression partielle en H₂S de 0,1 bar, l'écart entre les taux de charge en H₂S des deux solutions absorbantes s'élève à 0,58 mol/kg avec une capacité d'absorption pour la solution absorbante selon l'invention **(e)** augmentée de 66 % par rapport à la solution absorbante de MDEA de référence **(a)** contenant le même pourcentage poids d'amine et une concentration en fonction amine pourtant supérieure.

Ce gain est encore de 47 % par rapport à la solution **(c)** selon l'art antérieur contenant le même pourcentage poids (30%) de 1,2-bis-(2-diméthylaminoéthoxy)-éthane que la formulation selon l'invention **(e)**. On constate à l'inverse que la solution aqueuse **(b)** contenant 50% poids de 1,2-bis-(2-diméthylaminoéthoxy)-éthane selon l'art antérieur a sa capacité d'absorption diminuée de 84% par rapport à la solution de MDEA de référence **(a)** contenant le même pourcentage poids d'amine et une concentration en fonction amine pourtant inférieure. De la même manière la capacité d'absorption de l'H₂S pour une pression partielle de 0,1 bar de la solution aqueuse selon l'art antérieur **(d)** contenant 30% en poids de 1,2-bis-(2-diméthylaminoéthoxy)-éthane et 20% en poids de MDEA est diminuée de 9 % par rapport à la solution de MDEA de référence **(a)** contenant le même pourcentage poids d'amine (50 %) et une concentration en fonction amine pourtant inférieure.

A une pression partielle en H₂S de 0,3 bar, l'écart de taux de charge en H₂S entre la solution absorbante selon l'invention **(e)** et la solution de MDEA de référence **(a)** atteint 41 % en faveur de la solution absorbante selon l'invention. Ce gain est encore de 17 % par rapport à une solution aqueuse **(c)** contenant le même pourcentage poids de 1,2-bis-(2-diméthylaminoéthoxy)-éthane (30% poids) que la formulation selon l'invention **(e)**. L'écart de taux de charge en H₂S est encore de 30 % par rapport à la solution aqueuse **(e)** selon l'art antérieur contenant le même pourcentage poids de 1,2-bis-(2-diméthylaminoéthoxy)-éthane (30 %), le même pourcentage poids d'amine (50 %) et une concentration en fonction amine pourtant supérieure à celle la formulation selon l'invention **(e)**. On constate à l'inverse que la solution **(b)** selon l'art antérieur voit sa capacité d'absorption diminuée de 76 % par rapport à la solution de MDEA de référence **(a)** contenant le même pourcentage poids d'amine (50%) et une concentration en fonction amine pourtant inférieure.

A une pression partielle en H₂S de 1 bar, l'écart de taux de charge en H₂S entre la solution absorbante selon l'invention **(e)** et la solution de MDEA de référence **(a)** atteint 21 % en faveur de la solution absorbante selon l'invention. Ce gain est encore de 31 % par rapport à une solution aqueuse **(c)** contenant le même pourcentage poids de 1,2-bis-(2-diméthylaminoéthoxy)-éthane (30% poids) que la formulation selon l'invention **(e)**. Il est encore de 4 % par rapport à une solution aqueuse **(d)** selon l'art antérieur contenant le même pourcentage poids de 1,2-bis-(2-diméthylaminoéthoxy)-éthane (30% poids), le même pourcentage poids d'amine (50 % poids) et une concentration en fonction amine pourtant supérieure à celle la formulation selon l'invention **(e)**. On constate à l'inverse que la solution aqueuse **(b)** contenant 50% poids de de 1,2-bis-(2-diméthylaminoéthoxy)-éthane selon l'art antérieur a sa capacité d'absorption diminuée de 33 % par rapport à la solution de MDEA de référence **(a)** contenant le même pourcentage poids d'amine et une concentration en fonction amine pourtant inférieure.

On constate donc, contrairement à d'autres solutions de l'art antérieur, que la solution selon l'invention **(e)** a une capacité d'absorption de l'H₂S plus élevée que la solution aqueuse de référence **(a)** à 50 % poids de MDEA, et que les différentes solutions selon l'art antérieur exemplifiées, à 40°C, dans la gamme de pressions partielles en H₂S comprise entre 0,1 et 1 bar correspondant à une gamme de pression partielle représentative des conditions industrielles usuelles. Il apparaît que la solution absorbante exemplifiée selon l'invention permet de réduire les débits de solvant à mettre en oeuvre sur des applications de désacidification de gaz contenant de l'H₂S par rapport à la solution absorbante de MDEA de référence ou d'autres solutions de l'art antérieur.

### Exemple 2 : Capacité d'absorption du CO₂ de formulations d'amines pour un procédé de traitement de gaz acide.

Les performances de capacité d'absorption du CO₂ à 40 °C d'une solution aqueuse de 1,2-bis-(2-diméthylaminoéthoxy)-éthane en mélange avec du 2-[2-(2-diméthylaminoéthoxy)-éthoxy]-éthanol selon l'invention, contenant 30 % en poids de 1,2-bis-(2-diméthylaminoéthoxy)-éthane et 20% en poids de 2-[2-(2-diméthylaminoéthoxy)-éthoxy]-éthanol (solution **(e)**) sont comparées à celles :
- d'une solution aqueuse de MDEA contenant 47 % en poids de MDEA, qui constitue une solution absorbante de référence pour une élimination sélective en traitement de gaz (solution **(f)**), et
- d'une solution aqueuse de 1,2-bis-(2-diméthylaminoéthoxy)-éthane (selon le brevet US 4,405,582) contenant 30 % en poids de 1,2-bis-(2-diméthylaminoéthoxy)-éthane (solution **(c)**).

On réalise un test d'absorption à 40 °C sur des solutions aqueuses d'amine au sein d'une cellule d'équilibre thermostatée selon un mode opératoire identique à celui décrit dans l'exemple précédent, en remplaçant le CO₂ par l'H₂S.

Dans le cas d'une désacidification d'un gaz naturel, les pressions partielles en CO₂ rencontrées dans les gaz acides sont typiquement supérieures ou égales à 1 bar. A titre d'exemple, dans cette gamme industrielle, on compare dans le tableau 2 ci-dessous les taux de charge en CO₂ obtenus à 40°C pour une pression partielle en CO₂ de 1 bar entre la solution aqueuse de MDEA à 47 % poids de MDEA **(f)**, la solution selon l'invention **(e)**, et la solution aqueuse selon l'art antérieur **(c)**.

**Tableau 2**

| | | % poids diamine (I) | % poids amine (II) | %poids MDEA | Taux de charge à 40°C (mole CO₂/kg) solvant pour une pression partielle de 1 bar de CO₂ |
|---|---|---|---|---|---|
| Réf. de la solution | Amines en solution aqueuse | | | | PCO₂ = 1 bar |
| **(f)** | MDEA | 0% | 0% | 47% | 2,73 |
| **(c)** | Diamine I : 1,2-bis-(2-diméthylaminoéthoxy)-éthane (selon brevet US 4,405,582) | 30% | 0% | 0% | 2,67 |
| **(e)** | Diamine I : 1,2-bis-(2-diméthylaminoéthoxy)-éthane + monoamine II : 2-[2-(2-diméthylaminoéthoxy)-éthoxy]-éthanol | 30% | 20% | 0% | 3,25 |

A 40 °C, pour une pression partielle en CO₂ de 1 bar, la capacité d'absorption de la solution aqueuse selon l'invention **(e)** est supérieure à celle de la solution de référence **(f)** contenant le même pourcentage poids d'amine et une concentration en fonction amine supérieure. Ce gain de capacité permet de distinguer la formulation selon l'invention des formulations selon l'art antérieur à base de 1,2-bis-(2-diméthylaminoéthoxy)-éthane.

En effet, à une pression partielle de 1 bar, le taux de charge en CO₂ est de 3,25 mol/kg dans la solution absorbante selon l'invention **(e)** et de 2,73 mol/kg dans la solution absorbante de MDEA **(f)**. L'écart entre les taux de charge en CO₂ des deux solutions absorbantes s'élève à 0,52 mol/kg avec une capacité d'absorption pour la solution absorbante selon l'invention **(e)** augmentée de 19 % par rapport à la solution absorbante de MDEA de référence **(f)**. On constate à l'inverse que la solution aqueuse **(c)** selon l'art antérieur a sa capacité d'absorption diminuée de 2% par rapport à la solution de MDEA de référence **(f)**.

On constate donc, contrairement à une autre solution de l'art antérieur, que la solution aqueuse selon l'invention **(e)** a une capacité d'absorption du CO₂ plus élevée que la solution aqueuse de MDEA **(f)** et que la solution **(c)** selon l'art antérieur, à 40 °C, pour une pression partielle en CO₂ de 1 bar comprise dans une gamme de pressions partielles représentative des conditions industrielles usuelles. Il apparaît que la solution absorbante exemplifiée selon l'invention **(e)** permet de réduire les débits de solvant à mettre en oeuvre sur des applications de désacidification de gaz contenant du CO₂ par rapport à la solution absorbante de MDEA de référence ou d'autres solutions de l'art antérieur.

### Exemple 3 : Vitesse d'absorption du CO₂ d'une formulation d'amine pour un procédé d'absorption sélective.

On effectue une mesure comparative de la vitesse d'absorption du CO₂ entre une solution absorbante contenant 30 % en poids de 1,2-bis-(2-diméthylaminoéthoxy)-éthane et 20 % en poids de 2-[2-(2-diméthylaminoéthoxy)-éthoxy]-éthanol selon l'invention (solution **(e)**) et une solution aqueuse de N-méthyldiéthanolamine (MDEA) à 47 % en poids de MDEA (solution **(f)**), qui constitue une solution absorbante de référence pour une élimination sélective en traitement de gaz.

Pour chaque essai, on mesure le flux d'absorption du CO₂ par la solution absorbante aqueuse dans un réacteur fermé agité, dont la température est régulée à 40°C. 50 g de solution est introduite dans le réacteur fermé. On réalise une injection de CO₂ de 1 bar dans la phase vapeur du réacteur ayant un volume de 50 cm³. La phase gaz et la phase liquide sont agitées à 600 tours/minutes. On mesure la vitesse d'absorption du CO₂ par variation de pression dans la phase gaz. On détermine ainsi un coefficient de transfert global Kg.

Les résultats obtenus sont présentés dans le tableau 3 ci-dessous en vitesse d'absorption relative par rapport à la solution absorbante aqueuse de référence de MDEA **(f)**, cette vitesse d'absorption relative étant définie par le rapport du coefficient de transfert global de la solution absorbante testée sur le coefficient de transfert global de la solution absorbante de référence (avec MDEA).

**Tableau 3**

| Réf. de la solution | Solution absorbante | Vitesse d'absorption relative du CO₂ à 50°C |
|---|---|---|
| **(f)** | MDEA 47%poids | 1,00 |
| **(e)** | 1,2-bis-(2-diméthylaminoéthoxy)-éthane 30%poids + 2-[2-(2-diméthylaminoéthoxy)-éthoxy]-éthanol 20%poids | 0,91 |

L'examen des résultats fait ressortir, dans ces conditions de test, une vitesse d'absorption du CO₂ par la solution absorbante selon l'invention plus lente par rapport à la formulation de référence avec la MDEA **(f)**. Il apparaît donc que la solution absorbante exemplifiée selon l'invention présente étonnamment un intérêt particulier et amélioré dans le cas d'une désacidification sélective d'un effluent gazeux dans laquelle on cherche à limiter la cinétique d'absorption du CO₂.

La capacité d'absorption de l'H₂S par la solution absorbante exemplifiée selon l'invention étant plus importante que celle d'une solution aqueuse de MDEA (voir exemple 1 ci-dessus), il apparaît que la solution absorbante exemplifiée selon l'invention **(e)** permet de réduire les débits de solution absorbante à mettre en oeuvre sur des applications de désacidification sélective (H₂S par rapport au CO₂) pour absorber un débit donné de H₂S tout en réduisant le débit de CO₂ co-absorbé par rapport à la solution absorbante de MDEA de référence.

Annexe: liste des molécules représentées dans la figure 2

| **Réf.** | **Nom** | **Formule** |
|---|---|---|
| P1 | 2-[2-(2-diméthylaminoéthoxy)-éthoxy]-éthanol | 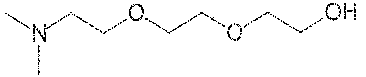 |
| P2 | 1,2-bis-(2-diméthylaminoéthoxy)-éthane Ou bis-(2-diméthylaminoéthoxy)-1,2-éthane | 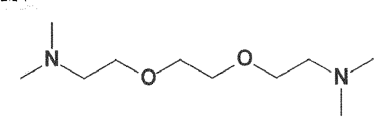 |
| P3 | diméthylaminoéthoxypolyéthoxyéthanol | 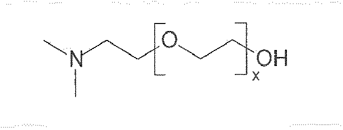 |
| P4 | 2-[2-(2-aminoéthoxy)-éthoxy]-éthanol | 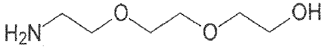 |
| P5 | bis-(aminoéthoxy)-1,2-éthane | 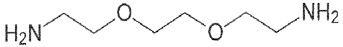 |
| P6 | Triéthylèneglycol | 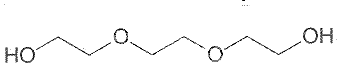 |
| P7 | 2-[2-(2-chloroéthoxy)-éthoxy]-éthanol | 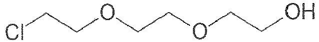 |
| P8 | bis-(2-chloroéthoxy)-1,2-éthane | 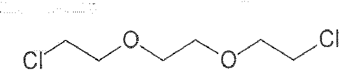 |
| P9 | 2-[2-(2-diméthylaminoéthoxy)-éthoxy]-1-chloroéthane | 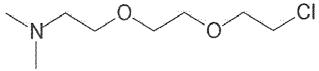 |
| P10 | Diméthylamine | (CH₃)₂NH |
| P11 | Oxyde d'éthylène | 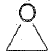 |

## Revendications

1. Solution absorbante pour éliminer des composés acides contenus dans un effluent gazeux, comportant :
- de l'eau ;
- un mélange d'amines comprenant du 1,2-bis-(2-diméthylaminoéthoxy)-éthane de formule (I) suivante : 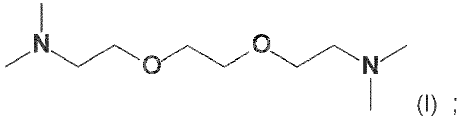 et
- du 2-[2-(2-diméthylaminoéthoxy)-éthoxy]-éthanol de formule (II) suivante :

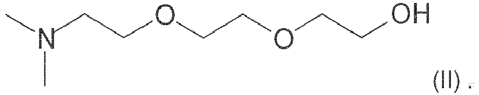

2. Solution absorbante selon la revendication 1, comportant entre 5 % et 95 % poids du mélange d'amines, de préférence entre 10 % et 90 % poids du mélange d'amines, et entre 5 % et 95 % poids d'eau, et de préférence entre 10 % et 90% poids d'eau.

3. Solution absorbante selon l'une des revendications précédentes, dans laquelle le rapport des concentrations massiques entre le 1,2-bis-(2-diméthylaminoéthoxy)-éthane et le du 2-[2-(2-diméthylaminoéthoxy)-éthoxy]-éthanol est compris entre 0,25 et 10, de préférence entre 0,5 et 2.

4. Solution absorbante selon l'une des revendications précédentes, comportant en outre entre 5 % et 50 % poids d'au moins une amine supplémentaire, ladite amine supplémentaire étant soit une amine tertiaire, soit une amine secondaire comprenant deux carbones secondaires en alpha de l'atome d'azote ou au moins un carbone tertiaire en alpha de l'atome d'azote.

5. Solution absorbante selon la revendication 4, dans laquelle ladite amine supplémentaire est une amine tertiaire choisie dans le groupe constitué par :
- la N-méthyldiéthanolamine ;
- la triéthanolamine ;
- la diéthylmonoéthanolamine ;
- la diméthylmonoéthanolamine ;
- l'éthyldiéthanolamine ;
- le 2-(2-diméthylamino-éthoxy)-éthanol ;
- la diméthyléthylamine ;
- la diméthyléthoxyéthylamine ;
- la bis(diméthylaminoéthyl)éther ; et
- la tétraméthyléthylènediamine.

6. Solution absorbante selon l'une des revendications précédentes, comportant en outre une quantité non nulle et inférieure à 30 % poids d'au moins une amine primaire ou une amine secondaire.

7. Solution absorbante selon la revendication 6, dans laquelle ladite amine primaire ou secondaire est choisie dans le groupe constitué par :
- la monoéthanolamine ;
- la diéthanolamine ;
- la N-butyléthanolamine ;
- l'aminoéthyléthanolamine ;
- le diglycolamine ;
- la pipérazine ;
- la 1-méthylpipérazine ;
- la 2-méthylpipérazine ;
- l'homopipérazine ;
- la N-(2-hydroxyéthyl)pipérazine ;
- la N-(2-aminoéthyl)pipérazine ;
- la morpholine ;
- la 3-(méthylamino)propylamine ;
- la 1,6-hexanediamine ;
- la N,N,-diméthyl-1,6-hexanediamine ;
- la N,N'-diméthyl-1,6-hexanediamine ;
- la N-méthyl-1,6-hexanediamine ; et
- la N,N',N'-triméthyl-1,6-hexanediamine.

8. Solution absorbante selon l'une des revendications précédentes, comportant en outre au moins un solvant physique choisi dans le groupe constitué par le méthanol, l'éthanol, le 2-éthoxyéthanol, le triéthylèneglycoldiméthyléther, le tétraéthylèneglycoldiméthyléther, le pentaéthylèneglycoldiméthyléther, l'hexaéthylèneglycoldiméthyléther, l'heptaéthylèneglycoldiméthyléther, l'octaéthylèneglycoldiméthyléther, le butoxyacétate de diéthylèneglycol, le triacétate de glycérol, le sulfolane, la N-méthylpyrrolidone, la N-méthylmorpholin-3-one, le N,N-diméthylformamide, la N-formyl-morpholine, la N,N-diméthyl-imidazolidin-2-one, le N-méthylimidazole, l'éthylèneglycol, le diéthylèneglycol, le triéthylèneglycol, le thiodiglycol, et le tributylphosphate.

9. Procédé d'élimination des composés acides contenus dans un effluent gazeux dans lequel on effectue une étape d'absorption des composés acides par mise en contact de l'effluent gazeux avec une solution absorbante selon l'une des revendications 1 à 8.

10. Procédé selon la revendication 9, dans lequel l'étape d'absorption des composés acides est réalisée à une pression comprise entre 1 bar et 200 bar, et à une température comprise entre 20°C et 100°C.

11. Procédé selon l'une des revendications 9 et 10, dans lequel on obtient une solution absorbante chargée en composés acides après l'étape d'absorption, et on effectue au moins une étape de régénération de ladite solution absorbante chargée en composés acides à une pression comprise entre 1 bar et 10 bar et à une température comprise entre 100 °C et 180 °C.

12. Procédé selon l'une des revendications 9 à 11, dans lequel l'effluent gazeux est choisi parmi le gaz naturel, les gaz de synthèse, les fumées de combustion, les fumées de hauts-fourneaux, les gaz de raffinerie tels que le gaz de synthèse, les gaz produits par craquage, les gaz combustibles, les gaz acides issus d'une unité aux amines, les gaz issus d'une unité de réduction en queue du procédé Claus, les gaz de fermentation de biomasse, les gaz de cimenterie, les fumées d'incinérateur.

13. Procédé selon l'une des revendications 9 à 12, mis en oeuvre pour l'élimination sélective de l'H₂S par rapport au CO₂ d'un effluent gazeux comportant de l'H₂S et du CO₂, de préférence du gaz naturel.

## Patentansprüche

1. Absorbierende Lösung zum Entfernen saurer Verbindungen, die in einem Abgas enthalten sind, umfassend:
- Wasser;
- ein Gemisch aus Aminen, umfassend 1,2-bis-(2-Dimethylaminoethoxy)-ethan der folgenden Formel (I): 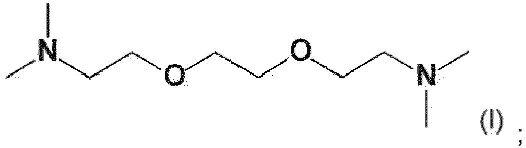 und
- 2-[2-(2-Dimethylaminoethoxy)-ethoxy]-ethanol der folgenden Formel (II):

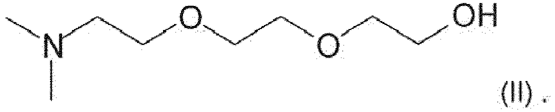

2. Absorbierende Lösung nach Anspruch 1, umfassend zwischen 5 Gew.-% und 95 Gew.-% des Amingemischs, vorzugsweise zwischen 10 Gew.-% und 90 Gew.-% des Amingemischs, und zwischen 5 Gew.-% und 95 Gew.-% Wasser und vorzugsweise zwischen 10 Gew.-% und 90 Gew.-% Wasser.

3. Absorbierende Lösung nach einem der vorhergehenden Ansprüche, wobei das Massenkonzentrationsverhältnis von 1,2-bis-(2-Dimethylaminoethoxy)-ethan und 2-[2-(2-Dimethylaminoethoxy)-ethoxy]-ethanol im Bereich zwischen 0,25 und 10, vorzugsweise zwischen 0,5 und 2 liegt.

4. Absorbierende Lösung nach einem der vorhergehenden Ansprüche, ferner umfassend zwischen 5 Gew.-% und 50 Gew.-% mindestens eines zusätzlichen Amins, wobei das zusätzliche Amin entweder ein tertiäres Amin oder ein sekundäres Amin ist, umfassend zwei sekundäre Kohlenstoffe an der alpha-Stickstoff-Position oder mindestens einen tertiären Kohlenstoff an der alpha-Stickstoff-Position.

5. Absorbierende Lösung nach Anspruch 4, wobei das zusätzliche Amin ein tertiäres Amin ist, ausgewählt aus der Gruppe bestehend aus:
- N-Methyldiethanolamin;
- Triethanolamin;
- Diethylmonoethanolamin;
- Dimethylmonoethanolamin;
- Ethyldiethanolamin;
- 2-(2-Dimethylamino-ethoxy)-ethanol;
- Dimethylethylamin;
- Dimethylethoxyethylamin;
- Bis(dimethylaminoethyl)ether; und
- Tetramethylethylendiamin.

6. Absorbierende Lösung nach einem der vorhergehenden Ansprüche, ferner umfassend eine Menge ungleich null und kleiner 30 Gew.-% mindestens eines primären Amins oder eines sekundären Amins.

7. Absorbierende Lösung nach Anspruch 6, wobei das primäre oder sekundäre Amin ausgewählt ist aus der Gruppe bestehend aus:
- Monoethanolamin;
- Diethanolamin;
- N-Butylethanolamin;
- Aminoethylethanolamin;
- Diglycolamin;
- Piperazin;
- 1-Methylpiperazin;
- 2-Methylpiperazin;
- Homopiperazin;
- N-(2-Hydroxyethyl)piperazin;
- N-(2-Aminoethyl)piperazin;
- Morpholin;
- 3-(Methylamino)propylamin;
- 1,6-Hexandiamin;
- N,N,-Dimethyl-1,6-hexandiamin;
- N,N'-Dimethyl-1,6-hexandiamin;
- N-Methyl-1,6-hexandiamin; und
- N,N',N'-Trimethyl-1,6-hexandiamin.

8. Absorbierende Lösung nach einem der vorhergehenden Ansprüche, ferner umfassend mindestens ein physikalisches Lösemittel, ausgewählt aus der Gruppe bestehend aus Methanol, Ethanol, 2-Ethoxyethanol, Triethylenglycoldimethylether, Tetraethylenglycoldimethylether, Pentaethylenglycoldimethylether, Hexaethylenglycoldimethylether, Heptaethylenglycoldimethylether, Octaethylenglycoldimethylether, Diethylenglycolbutoxyacetat, Glyceroltriacetat, Sulfolan, N-Methylpyrrolidon, N-Methylmorpholin-3-on, N,N-Dimethylformamid, N-Formylmorpholin, N,N-Dimethyl-imidazolidin-2-on, N-Methylimidazol, Ethylenglycol, Diethylenglycol, Triethylenglycol, Thiodiglycol und Tributylphosphat.

9. Verfahren zum Entfernen von sauren Verbindungen, die in einem Abgas enthalten sind, wobei ein Schritt zur Absorption der sauren Verbindungen durch Inkontaktbringen des Abgases mit einer absorbierenden Lösung nach einem der Ansprüche 1 bis 8 durchgeführt wird.

10. Verfahren nach Anspruch 9, wobei der Schritt zur Absorption der sauren Verbindungen bei einem Druck im Bereich zwischen 1 bar und 200 bar und bei einer Temperatur im Bereich zwischen 20 C und 100°C durchgeführt wird.

11. Verfahren nach einem der Ansprüche 9 und 10, wobei nach dem Absorptionsschritt eine mit sauren Verbindungen beladene absorbierende Lösung erhalten wird und mindestens ein Schritt zur Regeneration der mit sauren Verbindungen beladenen absorbierenden Lösung bei einem Druck im Bereich zwischen 1 bar und 10 bar und bei einer Temperatur im Bereich zwischen 100 °C und 180 °C durchgeführt wird.

12. Verfahren nach einem der Ansprüche 9 bis 11, wobei das Abgas ausgewählt ist aus Erdgas, Synthesegasen, Verbrennungsgasen, Hochofengasen, Raffineriegasen, wie beispielsweise Synthesegas, durch Cracken produzierten Gasen, brennbaren Gasen, sauren Gasen aus einer Amineinheit, Gasen aus einer Reduktionseinheit am Ende des Claus-Verfahrens, Biomasse-Gärungsgasen, Gasen aus Zementanlagen, Rauchgasen aus Verbrennungsanlagen.

13. Verfahren nach einem der Ansprüche 9 bis 12, das zum selektiven Entfernen von H₂S in Bezug auf CO₂ aus einem Abgas, umfassend H₂S und CO₂, vorzugsweise Erdgas, durchgeführt wird.

## Claims

1. An absorbent solution for removing acid compounds contained in a gaseous effluent, comprising:
- water;
- an amine mixture comprising 1,2-bis-(2-dimethylaminoethoxy)-ethane of formula (I) as follows: 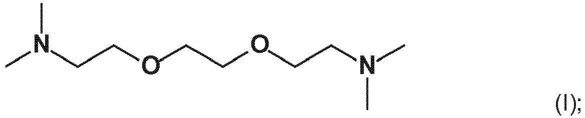 and
2-[2-(2-dimethylaminoethoxy)-ethoxy]-ethanol of formula (II) as follows:

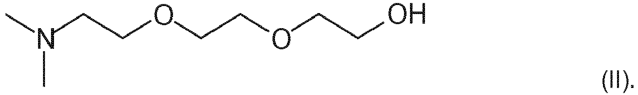

2. An absorbent solution as claimed in claim 1, comprising between 5 wt.% and 95 wt.% of amine mixture, preferably between 10 wt.% and 90 wt.% of amine mixture, and between 5 wt.% and 95 wt.% of water, preferably between 10 wt.% and 90 wt.% of water.

3. An absorbent solution as claimed in any one of the previous claims, wherein the mass concentration ratio of 1,2-bis-(2-dimethylaminoethoxy)-ethane to 2-[2-(2-dimethylaminoethoxy)-ethoxy]-ethanol ranges between 0.25 and 10, preferably between 0.5 and 2.

4. An absorbent solution as claimed in any one of the previous claims, further comprising between 5 wt.% and 50 wt.% of at least one additional amine, said additional amine being either a tertiary amine or a secondary amine having two secondary carbons at nitrogen alpha position or at least one tertiary carbon at nitrogen alpha position.

5. An absorbent solution as claimed in claim 4, wherein said additional amine is a tertiary amine selected from among the group made up of:
- N-methyldiethanolamine,
- triethanolamine,
- diethylmonoethanolamine,
- dimethylmonoethanolamine,
- ethyldiethanolamine,
- 2-(2-dimethylaminoethoxy)-ethanol,
- dimethylethylamine,
- dimethylethoxyethylamine,
- bis(dimethylaminoethyl)ether, and
- tetramethylethylenediamine.

6. An absorbent solution as claimed in any one of the previous claims, additionally comprise a non-zero amount less than 30 wt.% of at least one primary amine or secondary amine.

7. An absorbent solution as claimed in claim 6, wherein said primary or secondary amine is selected from among the group made up of:
- monoethanolamine,
- diethanolamine,
- N-butylethanolamine,
- aminoethylethanolamine,
- diglycolamine,
- piperazine,
- 1-methylpiperazine,
- 2-methylpiperazine,
- homopiperazine,
- N-(2-hydroxyethyl)piperazine,
- N-(2-aminoethyl)piperazine,
- morpholine,
- 3-(methylamino)propylamine,
- 1,6-hexanediamine,
- N,N-dimethyl-1,6-hexanediamine,
- N,N'-dimethyl-1,6-hexanediamine,
- N-methyl-1,6-hexanediamine, and
- N,N',N'-trimethyl-1,6-hexanediamine.

8. An absorbent solution as claimed in any one of the previous claims, further comprising at least one physical solvent selected from among the group made up of methanol, ethanol, 2-ethoxyethanol, triethylene glycoldimethylether, tetraethylene glycoldimethylether, pentaethylene glycoldimethylether, hexaethylene glycol-dimethylether, heptaethylene glycol-dimethylether, octaethylene glycoldimethylether, diethylene glycol butoxyacetate, glycerol triacetate, sulfolane, N-methylpyrrolidone, N-methylmorpholin-3-one, N,N-dimethylformamide, N-formyl-morpholine, N,N-dimethylimidazolidin-2-one, N-methylimidazole, ethylene glycol, diethylene glycol, triethylene glycol, thiodiglycol and tributyl phosphate.

9. A method of removing acid compounds contained in a gaseous effluent wherein an acid compound absorption stage is carried out by contacting the gaseous effluent with an absorbent solution as claimed in any one of claims 1 to 8.

10. A method as claimed in claim 9, wherein the acid compound absorption stage is carried out at a pressure ranging between 1 bar and 200 bar, and at a temperature ranging between 20°C and 100°C.

11. A method as claimed in any one of claims 9 and 10, wherein an acid compound-laden absorbent solution is obtained after the absorption stage and at least one stage of regenerating said acid compound-laden absorbent solution is carried out at a pressure ranging between 1 bar and 10 bar, and at a temperature ranging between 100°C and 180°C.

12. A method as claimed in any one of claims 9 to 11, wherein the gaseous effluent is selected from among natural gas, syngas, combustion fumes, blast furnace fumes, refinery gas such as syngas, cracked gas, combustible gas, acid gas from an amine plant, Claus tail gas, biomass fermentation gas, cement plant gas and incinerator fumes.

13. A method as claimed in any one of claims 9 to 12, implemented for selectively removing the H₂S over the CO₂ from a gaseous effluent comprising H₂S and CO₂, preferably natural gas.
